# EUROPÄISCHE PATENTSCHRIFT

(11) **EP 3 197 751 B1**
(45) Veröffentlichungstag und Bekanntmachung des Hinweises auf die Patenterteilung: **09.01.2019**
(21) Anmeldenummer: 15757292.6
(22) Anmeldetag: 03.09.2015
(51) Int. Cl.: B62D 21/02, B60R 19/34, B62D 21/15, B62D 25/08

(54) **KAROSSERIEANORDNUNG FÜR EINEN VORDERWAGEN EINES KRAFTFAHRZEUGS, DIE FÜR EINE FRONTALKOLLISION MIT GERINGER ÜBERDECKUNG AUSGEBILDET IST**
BODY ARRANGEMENT FOR A FRONT-END STRUCTURE OF A MOTOR VEHICLE, SAID BODY ARRANGEMENT BEING DESIGNED FOR A FRONTAL COLLISION WITH A SMALL OVERLAP
ENSEMBLE DE CARROSSERIE DESTINÉ À LA PARTIE AVANT D'UN VÉHICULE AUTOMOBILE ET CONFIGURÉ POUR UNE COLLISION FRONTALE A FAIBLE RECOUVREMENT

(30) Priorität: 25.09.2014 DE 102014219433
(43) Veröffentlichungstag der Anmeldung: 02.08.2017
(73) Patentinhaber: Bayerische Motoren Werke Aktiengesellschaft, 80809 München (DE)
(72) Erfinder: HASSELBACH, Johannes, 80807 München (DE); WÖLFLE, Florian, 81925 München (DE)
(86) Internationale Anmeldenummer: PCT/EP2015/070165
(87) Internationale Veröffentlichungsnummer: WO 2016/045936

(56) Entgegenhaltungen:
- WO-A1-2005/110815
- DE-A1-102011 004 105
- DE-A1-102012 005 843
- DE-C1- 377 258
- DE-C1- 19 611 934
- DE-U1-202014 103 165
- DE-U1-202014 104 027

## Beschreibung

Die vorliegende Erfindung betrifft eine Karosserieanordnung für einen Vorderwagen eines Kraftfahrzeugs, die für eine Frontalkollision des Kraftfahrzeugs mit geringer Überdeckung ausgebildet ist.

Bei einer Frontalkollision eines Kraftfahrzeugs mit einem Kollisionsgegner, bei der das Kraftfahrzeug mit dem Kollisionsgegner lediglich teilweise bzw. gering überlappt, bestehen besondere Anforderungen an eine Karosserie in einem Vorderwagenbereich des Kraftfahrzeugs. Ein bekanntes Kraftfahrzeug hat insbesondere einen linken Längsträger und einen rechten Längsträger, die bei einem Kraftfahrzeug mit Frontmotor auch Motorträger genannt werden können, an deren vorderen Enden ein Stoßfängerquerträger angeordnet ist. Bei der Frontalkollision mit geringer Überdeckung trifft der Kollisionsgegner insbesondere außerhalb von einem der beiden Längsträger auf ein überstehendes Ende des Stoßfängerquerträgers. Ohne zusätzliche Maßnahmen kann bei dieser Frontalkollision mit geringer Überdeckung der betroffene Längsträger nur zu einem verhältnismäßig geringen Anteil zum Abbau von Kollisionsenergie durch Verformung beitragen und der Kollisionsgegner verhältnismäßig weit in Richtung Fahrgastzelle eindringen.

Hierzu gibt es konstruktive Vorschläge, durch zusätzliche Karosseriestrukturelemente Kollisionsenergie in den Längsträger einzuleiten. Beispielswiese schlägt die DE 102011004105 A1 einen Kragträger vor, der drehmomentfest an dem Längsträger fixiert ist und in einen Zwischenraum zwischen einer Radaufnahme und einem Endabschnitt eines Stoßfängerquerträger hineinragt. Trifft nun der Kollisionsgegner bei einer Frontalkollision mit geringer Überdeckung im Verlauf der Kollision auf den Kragträger kann hierdurch Kollisionsenergie in den Längsträger eingeleitet werden und dieser zum Abbau von Kollisionsenergie beitragen. Ein weiteres Konzept ist in der US 20140008923 A1 gezeigt, wobei an dem vorderen Ende des Längsträgers zwei sogenannten Crashboxen angeordnet sind. Eine erste Crashbox ist fluchtend mit einer Längsachse des Längsträgers angeordnet, während sich die zweite Crashbox schräg nach außen und nach vorne gerichtet erstreckt um einen Endabschnitt des Stoßfängerquerträgers abzustützen. Die beiden Crashboxen sind damit im Wesentlichen V-förmig angeordnet und stützen sich beide am Längsträger ab. Hierdurch kann die zweite Crashbox auch bei einer Frontalkollision mit geringer Überdeckung Kollisionsenergie absorbieren und in den Längsträger einleiten. Eine weitere ähnliche Karosserieanordnung ist durch die DE 20 2014 104027 U1 offenbart,- welche hier für den nächstliegenden Stand der Technik gehalten wird. Es ist nunmehr die Aufgabe der vorliegenden Erfindung eine Karosserieanordnung für einen Vorderwagen eines Kraftfahrzeugs zu schaffen, bei der bei einer Frontalkollision des Kraftfahrzeugs mit geringer Überdeckung mit einfachen Mitteln bei geringem Bauraumbedarf und geringen Gewicht hinreichend Energie in die Längsträgeranordnung eingeleitet werden kann, um bei der Frontalkollision mit geringer Überdeckung einen hinreichenden Abbau von Kollisionsenergie zu erzielen.
Diese Aufgabe wird durch eine Karosserieanordnung für einen Vorderwagen eines Kraftfahrzeugs gelöst, die die Merkmale von Patentanspruch 1 aufweist. Vorteilhafte Weiterbildungen sind in den abhängigen Patentansprüchen aufgeführt.
Die Karosserieanordnung für einen Vorderwagen eines Kraftfahrzeugs gemäß der vorliegenden Erfindung hat eine untere Hauptlängsträgeranordnung, an deren vorderen Ende ein Stoßfängerquerträger angeordnet ist, eine obere Trägeranordnung, die oberhalb einer Radaufhängung verläuft, und ein Zugband, das an einer ersten Befestigungsstelle an einem vorderen Bereich der Hauptlängsträgeranordnung und an einer zweiten Befestigungsstelle an der oberen Trägeranordnung befestigt ist. Die erste Befestigungsstelle und die zweite Befestigungsstelle sind in Fahrzeugquerrichtung, d.h. in eine y-Richtung gemäß einem Fahrzeugkoordinatensystem, beabstandet. Das Zugband ist derart angeordnet, dass im Falle einer Frontalkollision des Kraftfahrzeugs mit geringer Überdeckung, bei der ein Kollisionsgegner seitlich bzw. außerhalb der Längsträgeranordnung auf die obere Trägeranordnung des Kraftfahrzeugs trifft, das Zugband die obere Trägeranordnung unter Zug an der Hauptlängsträgeranordnung abstützt.

Erfindungsgemäß wird durch eine sehr einfache konstruktive Maßnahme des geeigneten Vorsehens des Zugbands, das ein geringes Gewicht aufweist und zudem nur wenig Bauraum beansprucht, eine Einleitung von Kollisionsenergie in die Hauptlängsträgeranordnung gewährleistet bzw. die Hauptlängsträgeranordnung zur vorteilhaften Abstützung der oberen Trägeranordnung genutzt. Ferner kann durch die Abstützung des Zugbands an der Hauptlängsträgeranordnung, die Hauptlängsträgeranordnung deformiert werden und hierduch Kollisionsenergie abbauen. Durch das erfindungsgemäße Zugband ist es nicht notwendig, einen zusätzlichen Träger oder mehrere zusätzliche Träger, wie im Stand der Technik vorgeschlagen ist, vorzusehen.

Gemäß einer bevorzugten Weiterbildung der Karosserieanordnung der vorliegenden Erfindung ist die erste Befestigungsstelle in Fahrzeuglängsrichtung vor der zweiten Befestigungsstelle angeordnet.

Hierdurch ist sichergestellt, dass das Zugband unmittelbar bei Auftreffen des Kollisionsgegners auf die obere Trägeranordnung auf Zug beansprucht wird und eine stützende Wirkung der Hauptlängsträgeranordnung zu einem frühen Zeitpunkt der Frontalkollision genutzt wird.

Gemäß einer weiteren bevorzugten Weiterbildung der Karosserieanordnung der vorliegenden Erfindung ist die erste Befestigungsstelle in Fahrzeughochrichtung unterhalb der zweiten Befestigungsstelle angeordnet.

Vorteilhaft ist die obere Trägeranordnung ein Radhausstützträger. Ein Radhausstützträger erstreckt sich üblicherweise in eine Fahrzeuglängsrichtung und stützt das Radhaus ab. Zusätzlich oder alternativ kann die obere Trägeranordnung ein Federbeindom sein. Ein Federbeindom dient zur Aufnahme einer Federdämpfereinheit für ein Rad. Ferner kann die obere Trägeranordnung eine vorderste Karosseriesäule, d.h. eine sogenannte A-Säule, sein.

Üblicherweise sind Radhausstützträger, Federbeindom und ggf. auch die vorderste Karosseriesäule geeignet miteinander verbunden und kombiniert.

Gemäß einer bevorzugten Weiterbildung der Karosserieanordnung der vorliegenden Erfindung sind die erste Befestigungsstelle und die zweite Befestigungsstelle vor einer Vorderachse angeordnet. Hierdurch kann das Zugband bereits zu einem frühen Zeitpunkt der Frontalkollision mit geringer Überdeckung auf Zug beansprucht werden und seine Wirkung entfalten.

Vorteilhaft weist das Zugband im Einbauzustand zwischen der ersten Befestigungsstelle und der zweiten Befestigungsstelle eine größere Länge als die kürzeste Strecke zwischen der ersten Befestigungsstelle und der zweiten Befestigungsstelle auf.

Durch die größere Länge des Zugbands kann dieses sich bei dem Auftreffen des Kollisionsgegners zunächst um diesen herum anlegen, ohne dass es auf Zug beansprucht wird und entfaltet seine Wirkung ggf. erst, wenn der Kollisionsgegner auf die obere Trägeranordnung aufgetroffen ist. Demnach kann die Länge des Zugbands so ausgebildet sein, dass es unter Berücksichtigung der möglichen äußeren Form eines Kollisionsgegners erst auf Zug beansprucht wird, wenn der Kollisionsgegner auf die obere Trägeranordnung trifft.

Bevorzugt ist das Zugband flexibel, d.h. mit einer geringen Eigensteifigkeit bzw. Formstabilität, ausgebildet und insbesondere im Wesentlichen lediglich auf Zug beanspruchbar.

Dies ermöglicht ein Anlegen des Zugbands beim Auftreffen des Kollisionsgegners an den Kollisionsgegner bzw. um eine äußere Form des Kollisionsgegners sowie eine vorteilhafte Unterbringung des Zugbandes in dem Vorderwagen im Nichtgebrauchszustand des Zugbands. Ferner hat ein derartiges im Wesentlichen nur auf Zug beanspruchte Zugband den Vorteil, dass es bei einer Frontalkollision mit großer Überdeckung, d.h. bei einer Frontalkollision, bei der ein Kollisionsgegner vollständig auf die Längsträgeranordnung trifft und nicht seitlich bzw. außerhalb der Längsträgeranordnung auf das Kraftfahrzeug trifft, keine Wechselwirkung mit der oberen Trägeranordnung hat, da es sich durch seine Flexibilität nicht an der oberen Trägeranordnung abstützen kann.

Das Zugband kann beispielsweise nach Art eines Seils oder eines textilen Flächengebildes ausgebildet sein.

Dabei kann das Zugband beispielsweise mit metallischen Fäden oder mit Glasfasern, Kohlenstofffasern oder anderen geeigneten Fasern, die hohe Zugkräfte aufnehmen können, ausgebildet sein.

Das Zugband kann aus einem metallischen Werkstoff ausgebildet sein.

Ferner kann das Zugband aus einem Faserverbundwerkstoff ausgebildet sein. Hierfür können alle bekannten und geeigneten Faserverbundwerkstoffe verwendet sein.

An einem vorderen Ende der Hauptlängsträgeranordnung kann eine sogenannte Crashbox angeordnet sein, die beispielsweise austauschbar ist und Kollisionsenergie bei Kollisionen mit entsprechend großer Überdeckung und niedriger Geschwindigkeit des Kraftfahrzeugs absorbieren kann, ohne dass die Hauptlängsträgeranordnung irreversibel beschädigt wird.

Vorstehend erläuterte Weiterbildungen der Erfindung können beliebig miteinander kombiniert werden, soweit dies sinnvoll und möglich ist.

Es folgt eine Kurzbeschreibung der Figuren.
- Fig. 1: ist eine schematische Perspektivansicht einer Karosserieanordnung eines Vorderwagens gemäß einem Ausführungsbeispiel der vorliegenden Erfindung.
- Fig. 2: ist eine schematische Draufsicht der Karosserieanordnung des Ausführungsbeispiels der vorliegenden Erfindung.
- Fig. 3: ist eine schematische Seitenansicht der Karosserieanordnung gemäß dem Ausführungsbeispiel der vorliegenden Erfindung.

Nachstehend erfolgt eine detaillierte Beschreibung eines Ausführungsbeispiels der vorliegenden Erfindung unter Bezugnahme auf die Figuren.

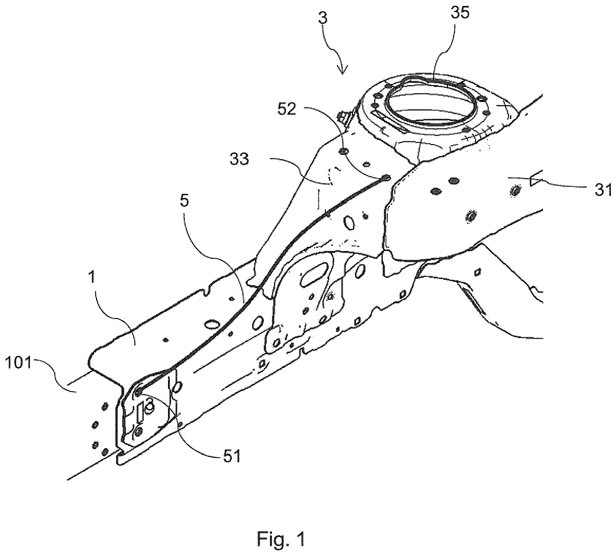

In Figur 1 ist ein Abschnitt einer Karosserieanordnung eines Vorderwagens eines Kraftfahrzeugs, insbesondere eines Personenkraftfahrzeugs, gemäß dem Ausführungsbeispiel der vorliegenden Erfindung gezeigt, wobei lediglich ein linker Abschnitt der Karosserieanordnung gezeigt ist und ein rechter Abschnitt der Karosserieanordnung des Vorderwagens des Kraftfahrzeugs prinzipiell analog und symmetrisch zu dem linken Abschnitt aufgebaut ist.

Insbesondere zeigt Figur 1 einen linken Längsträger 1, der bei einem Kraftfahrzeug mit Frontmotor ein sogenannter Motorträger sein kann und eine untere Hauptlängsträgeranordnung gemäß der vorliegenden Erfindung bildet, sowie eine obere Trägeranordnung 3 bestehend aus einem Radhausstützträger 31, einem Federbeinstützträger 33 und einem Federbeindom 35, wobei der Federbeindomstützträger 33 an dem Längsträger 1 fixiert ist und der Radhausstützträger 31 mit einer nicht gezeigten A-Säule oder einer nicht gezeigten Stirnwand des Kraftfahrzeugs verbunden sein kann. In Bezug auf ein vorderes Ende des Längsträgers 1 ist ein vorderes Ende der oberen Trägeranordnung 3 nach hinten versetzt angeordnet. Die obere Trägeranordnung 3 beginnt demnach weiter hinten als der Längsträger 1.

An einem vorderen Ende des Längsträgers 1 ist eine sogenannte Crashbox 101 angeordnet, wobei an der Crashbox 101 wiederum ein nicht gezeigter Stoßfängerquerträger befestigt ist. Die Crashbox 101 dient zur Absorption von Kollisionsenergie bei Kollisionen mit geringen Geschwindigkeiten und soll verhindern, dass bei diesen geringen Geschwindigkeiten der Längsträger 1 irreversibel beschädigt wird.

Ferner weist die Karosserieanordnung ein Zugband 5 auf, das an einer Befestigungsstelle 51 an einem vorderen Ende des Längsträgers 1 befestigt ist. Ferner ist ein hinteres Ende des Zugbands 5 an einer Befestigungsstelle 52 an der oberen Trägeranordnung 3 befestigt.

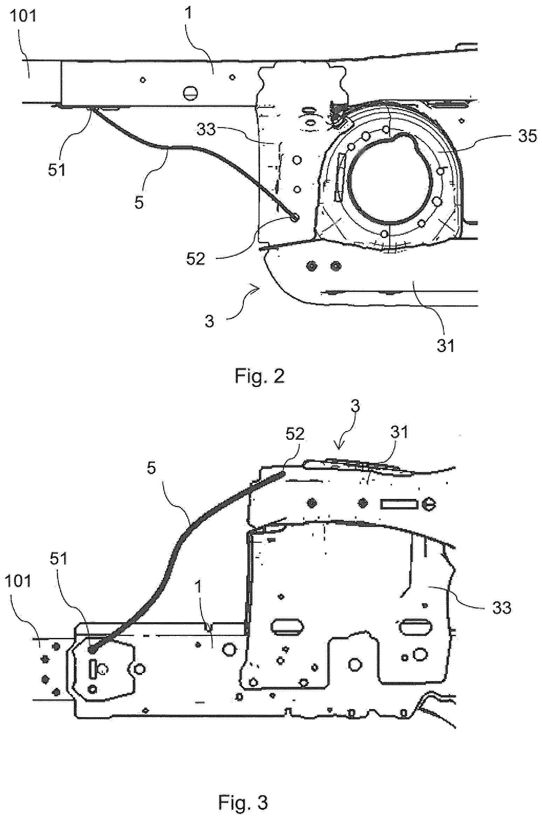

Wie insbesondere in der Draufsicht von Figur 2 zu sehen ist, sind die Befestigungsstellen 51 und 52 in Fahrzeugquerrichtung, d.h. in y-Richtung des Fahrzeugs voneinander beabstandet. Ferner sind die Befestigungsstellen 51 und 52 auch in Fahrzeuglängsrichtung, d.h. in x-Richtung voneinander beabstandet, wie in Figur 3 zu sehen ist. Ebenso sind die Befestigungsstellen 51 und 52 in Fahrzeughochrichtung, d.h. in eine z-Richtung des Fahrzeugs, voneinander beabstandet. Mit anderen Worten verläuft das Zugband 5 von der Befestigungsstelle 51 an dem vorderen Ende des Längsträgers schräg nach hinten, nach außen und nach oben bis zu der Befestigungsstelle 52 an der oberen Trägeranordnung 3.

Das Zugband 5 kann aus einem geeigneten Material ausgebildet sein, das hinreichend Zugkräfte aufnehmen kann und gleichzeitig eine gewisse Flexibilität, d.h. eine geringe Eigensteifigkeit, aufweist. Beispielsweise kann das Zugband 5 ein Seil oder Band aus Kohlenstofffasern oder anderen geeigneten Fasern ausgebildet sein. Es ist auch denkbar, dass das Zugband 5 aus metallischen Fasern ausgebildet ist.

Das Zugband 5 ist in seiner Länge länger als ein kürzester Abstand zwischen der Befestigungsstelle 51 und der Befestigungsstelle 52. Die Länge ist dabei derart gewählt, dass das Zugband sich bei einem Auftreffen eines durchschnittlichen Kollisionsgegners auf das Kraftfahrzeug mit geringer Überdeckung erst auf Zug beansprucht wird, wenn der Kollisionsgegner auf die obere Trägeranordnung 3 trifft.

Nachstehend ist eine Funktion und Wirkung der Karosserieanordnung gemäß dem Ausführungsbeispiel der vorliegenden Erfindung beschrieben.

Die Karosserieanordnung gemäß der vorliegenden Erfindung ist insbesondere für einen Lastfall ausgelegt und wirksam, bei dem ein Kollisionsgegner mit geringer Überlappung frontal auf das Kraftfahrzeug trifft. Insbesondere trifft bei diesem Lastfall der Kollisionsgegner seitlich bzw. außerhalb des Längsträgers 1 auf das Kraftfahrzeug, so dass der Längsträger 1 zunächst nur zu einem geringen Teil oder überhaupt nicht zum Abbau von Kollisionsenergie durch Verformung beitragen kann. Nach einer Verformung eines äußeren Endabschnitts des nicht gezeigten Stoßfängerquerträgers in Richtung des Längsträgers 1 trifft der Kollisionsgegner auf die obere Trägeranordnung 3, die in Bezug auf den Längsträger weiter hinten angeordnet ist, wobei sich das Zugband 5 durch seine vorstehend beschriebene Länge zunächst um den Kollisionsgegner ohne Zugbeanspruchung anlegt und dann erst bei fortschreitenden Eindringen des Kollisionsgegners auf Zug beansprucht wird und die obere Trägeranordnung 3 an dem Längsträger 1 durch Zug abstützt.

Das Zugband 5 ist dabei ein verhältnismäßig leichtes Element, das leicht an einer bestehenden Fahrzeugkarosserie angebracht und untergebracht werden kann, wobei es eine vorteilhafte Wirkung durch Abstützung an dem Längsträger 1 bei der Kollision mit geringer Überdeckung entfalten kann. Dabei kann durch die Abstützung des Zugbands 5 auch der Längsträger 1 verformt werden und hierdurch Energie abbauen, obwohl der Kollisionsgegner bei der Kollision mit geringer Überdeckung nicht direkt auf den Längsträger 1 getroffen ist.

In einem Lastfall mit beispielsweise vollständiger Überdeckung, bei der der Kollisionsgegner frontal auf einen oder beide Längsträger 1 trifft, entfaltet das Zugband 5 vorteilhaft keine Wirkung. Die Kollisionsenergie wird im Wesentlichen durch Verformung des Längsträgers 1 abgebaut bzw. absorbiert. Das Zugband 5 kann dabei durch seine Flexibilität bzw. mangelnde Formstabilität die Verformung des Längsträgers 1 nicht wesentlich beeinflussen.

## Patentansprüche

1. Karosserieanordnung für einen Vorderwagen eines Kraftfahrzeugs mit einer unteren Haupttängsträgeranordnung (1), an deren vorderen Ende ein Stoßfängerquerträger angeordnet ist,
einer oberen Trägeranordnung (3), die oberhalb einer Radaufhängung verläuft, und
einem Zugband (5), das an einer ersten Befestigungsstelle (51) an einem vorderen Bereich der Hauptlängsträgeranordnung (1) und an einer zweiten Befestigungsstelle (52) an der oberen Trägeranordnung (3) befestigt ist, wobei die erste Befestigungsstelle (51) und die zweite Befestigungsstelle (52) in Fahrzeugquerrichtung beabstandet sind,
wobei das Zugband (5) derart angeordnet ist, dass im Falle einer Frontalkollision des Kraftfahrzeugs mit geringer Überdeckung, bei der ein Kollisionsgegner seitlich der Längsträgeranordnung (1) auf die obere Trägeranordnung (3) des Kraftfahrzeugs trifft, das Zugband (5) die obere Trägeranordnung (3) unter Zug an der Hauptlängsträgeranordnung (1) abstützt.

2. Karosserieanordnung nach Patentanspruch 1, wobei die erste Befestigungsstelle (51) in Fahrzeuglängsrichtung vor der zweiten Befestigungsstelle (52) angeordnet ist.

3. Karosserieanordnung nach Patentanspruch 1 oder 2, wobei die obere Trägeranordnung (3) ein Radhausstützträger (31) und/oder ein Federbeindom (33, 35) und/oder eine vorderste Karosseriesäule ist.

4. Karosserieanordnung nach einem der Patentansprüche 1 bis 3, wobei die erste Befestigungsstelle (51) und die zweite Befestigungsstelle (52) vor einer Fahrzeugvorderachse angeordnet sind.

5. Karosserieanordnung nach einem der Patentansprüche 1 bis 4, wobei das Zugband (5) im Einbauzustand zwischen der ersten Befestigungsstelle (51) und der zweiten Befestigungsstelle (52) eine größere Länge als die kürzeste Strecke zwischen der ersten Befestigungsstelle (51) und der zweiten Befestigungsstelle (52) aufweist.

6. Karosserieanordnung nach einem der Patentansprüche 1 bis 5, wobei das Zugband (5) flexibel ausgebildet ist und im Wesentlichen lediglich auf Zug beanspruchbar ausgebildet ist.

7. Karosserieanordnung nach Patentanspruch 6, wobei das Zugband (5) nach Art eines Seils oder eines textilen Flächengebildes ausgebildet ist.

8. Karosserieanordnung nach einem der Patentansprüche 1 bis 7, wobei das Zugband (5) aus einem metallischen Werkstoff ausgebildet ist.

9. Karosserieanordnung nach einem der Patentansprüche 1 bis 8, wobei das Zugband (5) aus einem Faserverbundwerkstoff ausgebildet ist.

## Claims

1. A body arrangement for a front-end structure of a motor vehicle, comprising a lower main longitudinal member (1), on the front end of which there is arranged a shock-absorbing cross member,
comprising an upper member (3), which runs above a wheel suspension, and comprising a tension strap (5) which is fastened at a first fastening point (51) to a front region of the main longitudinal member (1) and at a second fastening point (52) to the upper member (3), wherein the first fastening point (51) and the second fastening point (52) are at a distance from one another in a vehicle transverse direction,
wherein the tension strap (5) is arranged in such a way that, in the event of a frontal collision of the motor vehicle with a small overlap, in the case of which a collision partner strikes the upper member (3) of the motor vehicle laterally with respect to the longitudinal member (1), the tension strap (5), under tension, supports the upper member (3) on the main longitudinal member (1).

2. A body arrangement according to claim 1, wherein the first fastening point (51) is arranged in front of the second fastening point (52) in a longitudinal direction of the vehicle.

3. A body arrangement according to either claim 1 or 2, wherein the upper member (3) is a wheelhouse support beam (31) and/or a suspension strut top mounting (33, 35) and/or a foremost body pillar.

4. A body arrangement according to any of claims 1 to 3, wherein the first fastening point (51) and the second fastening point (52) are arranged in front of a front axle of the vehicle.

5. A body arrangement according to any of claims 1 to 4, wherein the tension strap (5), when mounted between the first fastening point (51) and the second fastening point (52), is longer than the shortest distance between the first fastening point (51) and the second fastening point (52).

6. A body arrangement according to any of claims 1 to 5, wherein the tension strap (5) is designed to be flexible and can essentially bear loads only when under tension.

7. A body arrangement according to claim 6, wherein the tension strap (5) is formed in the manner of a rope or a textile fabric.

8. A body arrangement according to any of claims 1 to 7, wherein the tension strap (5) is made of a metal material.

9. A body arrangement according to any of claims 1 to 8, wherein the tension strap (5) is made of a fibre-reinforced composite.

## Revendications

1. Agencement de carrosserie destiné à la partie avant d'un véhicule automobile comprenant un dispositif de support longitudinal principal inférieur (1) à l'extrémité avant duquel est monté un support transversal de pare-choc,
un dispositif de support supérieur (3) qui s'étend au-dessous d'une suspension de roue, et
une bande de traction (5) qui est fixée au niveau d'un premier emplacement de fixation (51) sur la zone avant du dispositif de support longitudinal principal (1) et au niveau d'un second emplacement de fixation (52) sur le dispositif de support supérieur (3), le premier emplacement de fixation (51) et le second emplacement de fixation (52) étant situés à distance dans la direction transversale du véhicule,
la bande de traction (5) étant montée de sorte que, en cas de collision frontale du véhicule avec faible chevauchement, pour laquelle une partie impliquée dans la collision heurte latéralement le dispositif de support longitudinal (1) sur le dispositif de support supérieur (3) du véhicule, la bande de traction (5) applique le dispositif de support (3) sous traction sur le dispositif de support longitudinal principal (1).

2. Agencement de carrosserie conforme à la revendication 1,
dans lequel le premier emplacement de fixation (51) est situé dans la direction longitudinale du véhicule à l'avant du second emplacement de fixation (52).

3. Agencement de carrosserie conforme à la revendication 1 ou 2, dans lequel le dispositif de support supérieur (3) est un support d'appui de logement de roue (31) et/ou une jambe de force (33, 35) ou une colonne de carrosserie avant.

4. Agencement de carrosserie conforme à l'une des revendications 1 à 3,
dans lequel le premier emplacement de fixation (51) et le second emplacement de fixation (52) sont positionnés à l'avant de l'essieu avant du véhicule.

5. Agencement de carrosserie conforme à l'une des revendications 1 à 4,
dans lequel, à l'état monté, la bande de traction (5) a, entre le premier emplacement de fixation (51) et le second emplacement de fixation (52) une longueur supérieure au plus court trajet entre le premier emplacement de fixation (51) et le second emplacement de fixation (52).

6. Agencement de carrosserie conforme à l'une des revendications 1 à 5,
dans lequel la bande de traction (5) est flexible et est réalisée de façon à ne pouvoir être essentiellement sollicitée qu'en traction.

7. Agencement de carrosserie conforme à la revendication 6,
dans lequel la bande de traction (5) est réalisée sous la forme d'un câble ou d'un tissu textile plat.

8. Agencement de carrosserie conforme à l'une des revendications 1 à 7,
dans lequel la bande de traction (5) est réalisée en un matériau métallique.

9. Agencement de carrosserie conforme à l'une des revendications 1 à 8,
dans lequel la bande de traction (5) est réalisée en un matériau synthétique renforcé par des fibres.
